Europäisches Patentamt

European Patent Office

Office européen des brevets

(11) Veröffentlichungsnummer: **0 123 984**
**A1**

## EUROPÄISCHE PATENTANMELDUNG

(21) Anmeldenummer: **84104145.2**

(22) Anmeldetag: **12.04.84**

(51) Int. Cl.³: **C 03 C 25/02, D 06 B 3/04**

(30) Priorität: **27.04.83 DE 3315212**

(43) Veröffentlichungstag der Anmeldung: **07.11.84**
**Patentblatt 84/45**

(84) Benannte Vertragsstaaten: **AT DE FR GB**

(71) Anmelder: **International Standard Electric Corporation, 320 Park Avenue, New York New York 10022 (US)**

(84) Benannte Vertragsstaaten: **FR GB AT**

(71) Anmelder: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Detroy, Kurt, Tubizer Strasse 11, D-7015 Korntal-Münchingen (DE)**
Erfinder: **Wittmann, Manfred, Dr., Drostestrasse 15, D-7000 Stuttgart 31 (DE)**

(74) Vertreter: **Graf, Georg Hugo, Dipl.-Ing. et al, c/o Standard Elektrik Lorenz AG Patent- und Lizenzwesen Postfach 300 929 Kurze Strasse 8, D-7000 Stuttgart 30 (DE)**

(54) **Vorrichtung zum Herstellen einer beschichteten optischen Faser aus einer Vorform.**

(57) Die Vorrichtung zum Herstellen von beschichteten optischen Fasern (7) weist eine Ziehofen (1), eine Beschichtungseinrichtung (4), eine Aushärtestrecke (8) und eine Aufwickeleinrichtung (9) auf. Die Beschichtungseinrichtung (4) besteht aus mindestens zwei übereinander und ineinander gefügten Behältern (5) für mindestens ein Beschichtungsmaterial (19).

EP 0 123 984 A1

K. Detroy - M. Wittmann 1-2

Vorrichtung zum Herstellen einer
beschichteten optischen Faser aus einer Vorform

Die Erfindung bezieht sich auf eine Vorrichtung gemäß
dem Oberbegriff des Anspruchs 1.

Aus der DE-OS 31 51 198 ist ein Verfahren zum Herstellen
einer optischen Faser aus einer Vorform bekannt. Die aus
der Vorform gezogene Faser wird dabei, bevor sie mit
einem festen Gegenstand in Berührung kommt, durch eine
Kühleinrichtung geleitet. Die Kühleinrichtung enthält
ein flüssiges Material, das in seiner Grundform dem
Material gleicht, mit dem die Faser in einer anschließenden abgesetzten Beschichtungseinrichtung überzogen wird. Dann wird die beschichtete Faser durch einen
Härtungsofen geleitet und anschließend aufgewickelt. Als

ZT/P1-Wr/B
21.04.1984

.
/
.

K. Detroy 1-2

Beschichtungseinrichtung ist ein Gefäß vorgesehen, das
am Boden eine Düse aufweist, deren Durchmesser dem
Durchmesser der beschichteten Faser entspricht.

Der Erfindung liegt die Aufgabe zugrunde, eine Vorrichtung der eingangs genannten Art anzugeben, mit der die
aus einer Vorform gezogene Faser gleichmäßig, schnell
und auch unter Verwendung von Beschichtungsmaterialien
unterschiedlicher Viskosität beschichtet werden kann.

Die Lösung dieser Aufgabe erfolgt mit den im Anspruch 1
angegebenen Merkmalen. Weiterbildungen der Erfindung
können den Unteransprüchen entnommen werden.

Mit der Vorrichtung mit der neuen Beschichtungseinrichtung lassen sich bei hohen Abzugsgeschwindigkeiten der
Faser von der Vorform gleichmäßige Beschichtungen der
Faser erzielen. Es können auch Beschichtungsmaterialien
mit verschiedenen Viskositäten und unterschiedliche Vernetzungseigenschaften eingesetzt werden und dadurch Beschichtungen mit einer von innen nach außen sich änderden Elastizität erreicht werden.

./.

K. Detroy 1-2

Die Erfindung wird nun anhand von Zeichnungen eines Ausführungsbeispiels näher erläutert. Es zeigen:

Fig. 1 schematisch den Aufbau der Vorrichtung und

Fig. 2 den obersten Behälter der Vorrichtung.

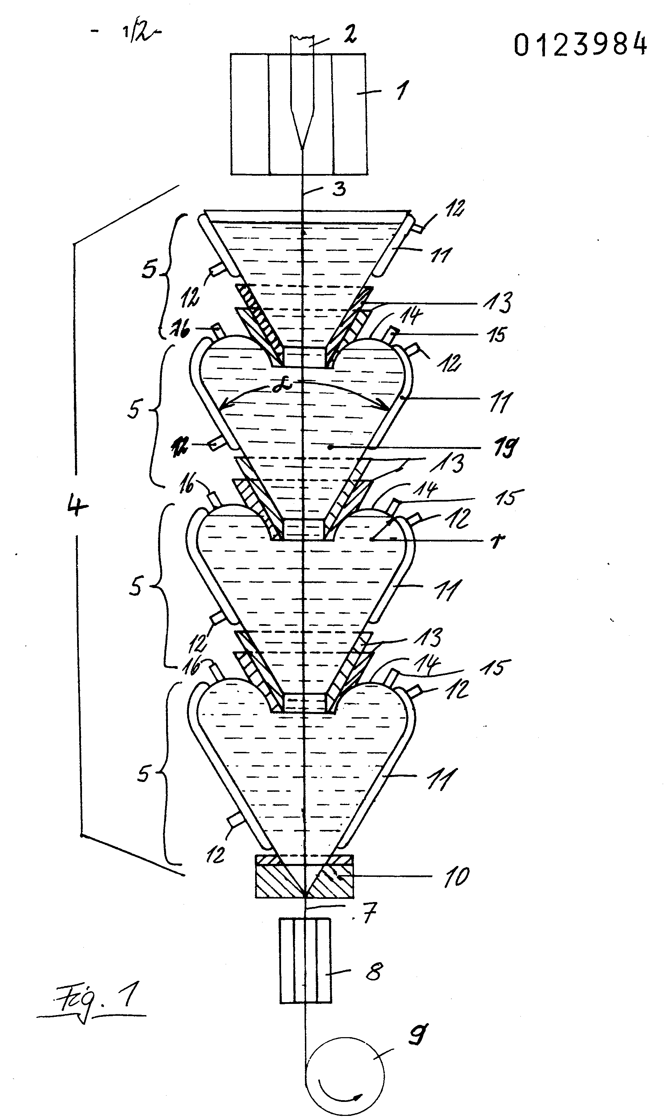

In Fig. 1 sind in der schematischen Darstellung der teilweise geschnittenen Vorrichtung alle Halterungen und Anschlüsse sowie Versorgungseinrichtungen nicht dargestellt, um eine bessere Übersicht zu erhalten.

In einem Ziehofen 1 ist eine Vorform 2 eingesetzt, aus der in bekannter Weise eine optische Faser 3 nach unten abgezogen wird. In einem bestimmten Abstand zum Ziehofen 1 ist darunter eine Beschichtungseinrichtung 4 angeordnet. Auf der Strecke zwischen dem Ziehofen 1 und der Beschichtungseinrichtung 4 kühlt sich die Faser 3 soweit ab, daß sie beschichtet werden kann. Die aus dem Ziehofen 1 austretende heiße Faser 3 benötigt zum Abkühlen höchstens 1 Sekunde. Die Beschichtungseinrichtung 4 besteht im dargestellten Beispiel aus vier übereinander angeordneten und ineinander gefügten Behältern 5. Der unterste Behälter 5 ruht in einer Düse 6, aus der die beschichtete Faser 7 austritt. Daran schließt sich eine Aushärtestrecke 8 an, der eine Aufwickeleinrichtung 9 für die beschichtete Faser 7 folgt.

./.

0123984

K. Detroy 1-2

Je nach verwendetem Material für die Beschichtung besteht die Aushärtestrecke 8 aus einer Wärme, ultraviolettes Licht oder Elektronenstrahlen abgehenden Vorrichtung.

Die Behälter 5 der Beschichtungseinrichtung 4 weisen einen runden Querschnitt auf, sind trichterförmig und sind zumindest teilweise doppelwandig 11 ausgebildet. Die doppelwandigen Teile tragen Stutzen 12, durch die ein temperierendes Medium, z.B. warmes Wasser, eingeleitet werden kann. Der von den Behälterwänden eingeschlossene Trichterwinkel $\alpha$ soll etwa 50 bis 60° betragen. Die Behälter 5 tragen in ihrem unteren Bereich Verstärkungen 13, mit deren Hilfe sie ineinandergefügt sind. Deswegen fehlen beim untersten Behälter, der in der Düse 10 ruht, die Verstärkungen. Der Auslaß der Behälter weist im Verhältnis zum Durchmesser der Faser 3 einen sehr viel größeren Durchmesser auf. Die Behälter 5 haben einen konvex gewölbten Abschluß 14, der in einem trichterförmig nach innen gezogenen Rand ausläuft. In diesem trichterförmig gezogenen Rand werden der jeweils obere Behälter mit seinen Verstärkungen 13 eingesetzt. Der Radius $r$ des konvex gewölbten Abschlusses 14 der Behälter 5 beträgt etwa 36 mm. Im Abschluß 14 sind zwei Stutzen 15, 16 vorhanden, über die Beschichtungsmaterial in die Behälter 5 eingefüllt bzw. eine Druckbeaufschlagung mit Luft oder Schutzgas erfolgen kann.

./.

K. Detroy 1-2

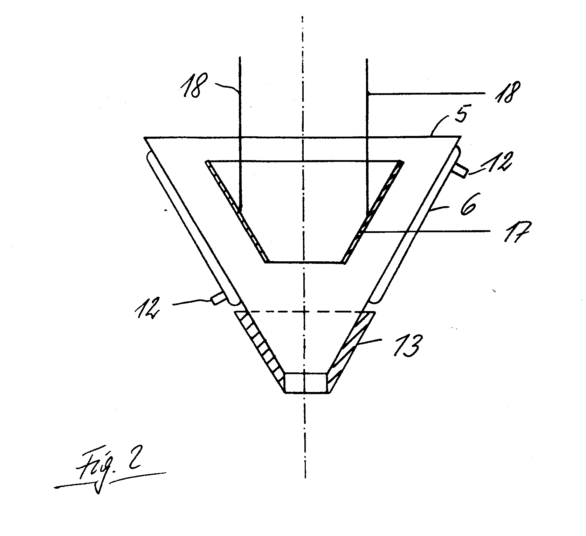

Der oberste Behälter 5 weist keinen konvex gewölbten Abschluß auf. Dafür kann in ihm, wie Fig. 2 zeigt, ein
nach unten zeigender Trichter 17 eingesetzt werden. Der
Trichter 17 wird von Stangen 18 gehalten und er dient
zum Abscheiden von Blasen aus dem in den Behältern gefüllten Beschichtungsmaterial. Diese Blasen entstehen
durch die in das Beschichtungsmaterial gezogene Faser 3
durch Mitreißen von Luft.

Die Vorrichtung zum Herstellen einer beschichteten Faser
7 aus einer Vorform 2 arbeitet wie folgt:

Nach dem Einschalten des Ziehofens 1 und der Aushärtestrecke 8 kann mit dem Ziehen der Faser 3 begonnen
werden. Die leere Beschichtungsvorrichtung 4 befindet
sich auf der Düse 10 bzw. deren nicht dargestellte
Halterung. Die Faser 3 wird durch die Beschichtungseinrichtung 4, durch die Düse 10 und durch die Aushärtestrecke 8 zur Aufwickeleinrichtung 9 geführt und dort
befestigt. Danach wird die Vorrichtung ausgerichtet und
dann vortemperiertes Beschichtungsmaterial 19 in die Beschichtungseinrichtung 4 eingefüllt.

./.

0123984

K. Detroy 1-2

Die erste Füllung der Behälter 5 erfolgt durch Eingabe des Beschichtungsmaterials 19 in den obersten Behälter 5. Vom untersten Behälter 5 her füllt sich nun die Beschichtungseinrichtung 4 auf. Dabei können sich in den konvex gewölbten Abschlüssen 14 Luftpolster ausbilden, wie dies bei den beiden mittleren Behältern 5 dargestellt ist. Durch das durch die doppelwandig 11 ausgebildeten Bereiche der Behälter 5 fließende warme Wasser wird das Beschichtungsmaterial 19 im jeweiligen Behälter auf einer bestimmten Temperatur gehalten. Es läßt sich dadurch ein gewünschtes und für die Beschichtung der Faser 3 optimales Temperaturprofil der Beschichtungseinrichtung 4 einstellen. Beispielsweise wird die Temperatur des Beschichtungsmaterials 19 im untersten Behälter 5 auf 30°C gehalten und die Temperatur des Beschichtungsmaterials im jeweils darüber angeordneten Behälter um 5°C tiefer eingestellt. Im dargestellten Beispiel weist dann das Beschichtungsmaterial im obersten Behälter eine Temperatur von 15°C auf. Hierbei stellen sich unterschiedliche Viskositäten des Beschichtungsmaterials in den einzelnen Behältern ein.

./.

0123984

K. Detroy 1-2

Durch eine Einleitung von Druckluft in die Behälter oder eine Druckbeaufschlagung mit Schutzgas über die Stutzen 16 kann eine Unterstützung der Beschichtung der Faser 3 erreicht werden. Außerdem läßt sich hierdurch ein Ausgleich der Abnahme des Beschichtungsmaterials im jeweiligen Behälter erreichen. Über die Stutzen 15 kann in den jeweiligen Behälter 5 Beschichtungsmaterial nachgefüllt werden.

Mit dem Ziehen der Faser 3 wird begonnen, in dem die Aufwickelvorrichtung 9 einen Zug auf die Faser ausübt. Die Faser 3 wird in der Beschichtungseinrichtung 4 stufenweise beschichtet, hierbei abgekühlt und im Anschluß an den untersten Behälter 5 erhält sie durch die Düse 10 den vorgesehenen Außendurchmesser. Die beschichtete Faser 7 wird dann beim Durchlaufen der Aushärtestrecke 8 gehärtet und von der Aufwickeleinrichtung 9 anschließend aufgewickelt.

Als Beschichtungsmaterial 19 kann beispielsweise ein Silikonkautschuk verwendet werden, der in der Aushärtestrecke 8 durch Wärmeeinwirkung aushärtet. Es kann auch ein Acrylharz verwendet werden, das in der Aushärtestrecke 8 durch Bestrahlung mit UV-Licht ausgehärtet wird.

./.

K. Detroy 1-2


Im Betrieb der Vorrichtung können durch das einstellbare
Druck- und Temperaturprofil der Beschichtungseinrichtung
4 die dynamischen Betriebsbedingungen kontinuierlich
eingestellt werden. Dies ist besonders vorteilhaft bei
veränderlichen Abzugsgeschwindigkeiten, weil dadurch
immer eine einwandfreie Beschichtung durch die Anpassung
an die jeweilige Abzugsgeschwindigkeit gewährleistet ist.

K.Detroy - M. Wittmann 1-2

Patentansprüche

1. Vorrichtung zum Herstellen einer beschichteten optischen Faser aus einer Vorform mit einem Ziehofen zum
Ziehen einer Faser aus der Vorform, einer Beschichtungseinrichtung mit einer Düse am Boden zum Beschichten der
Faser mit einem Beschichtungsmaterial, einer Aushärtestrecke zum Härten der Beschichtung und einer Aufwickeleinrichtung zum Aufwickeln der erzeugten beschichteten
optischen Faser, d a d u r c h   g e k e n n -
z e i c h n e t  , daß die Beschichtungseinrichtung (4)
aus mindestens zwei auf der Düse (10) übereinander angeordneten und ineinander gefügten Behältern (5) für
mindestens ein Beschichtungsmaterial (19) beteht.

ZT/P1-Wr/B
21.04.1983

./.

0123984

K. Detroy 1-2

2. Vorrichtung nach Anspruch 1, dadurch gekennzeichnet, daß die Behälter (5) doppelwandig (11) sind und Stutzen (12) zur Einleitung eines temperierenden Mediums aufweisen.

3. Vorichtung nach Anspruch 1, dadurch gekennzeichnet, daß die Behälter (5) trichterförmig ausgebildet sind.

4. Vorrichtung nach Anspruch 3, dadurch gekennzeihnet, daß der Trichterwinkel (∝) der Behälter (5) etwa 50 bis 60° beträgt.

5. Vorrichtung nach Anspruch 3, dadurch gekennzeichnet, daß die Behälter (5) oben einen konvex gewölbten Abschluß (14) mit einem trichterförmig nach innen gezogenen Rand aufweisen.

6. Vorrichtung nach Anspruch 5, dadurch gekennzeichnet, daß der Radius des konvex gewölbten Abschlusses (14) etwa 36 mm beträgt.

./.

K. Detroy 1-2

7. Vorrichtung nach Anspruch 3, dadurch gekennzeichnet, daß der Durchmesser des unteren Auslasses der Behälter (5) vielfach größer als der Durchmesser der Faser (3) ist.

8. Vorrichtung nach Anspruch 5, dadurch gekennzeichnet, daß in den oberen Abschlüssen (14) Stutzen (15) zur Zugabe von Beschichtungsmaterial (19) vorhanden sind.

9. Vorrichtung nach Anspruch 5, dadurch gekennzeichnet, daß in den oberen Abschlüssen (14) Stutzen (16) zur Einleitung von Druckluft oder Schutzgas vorhanden sind.

10. Vorrichtung nach Anspruch 1, dadurch gekennzeichnet, daß im obersten Behälter (5) ein nach unten zeigender Trichter (17) vorhanden ist, dessen Durchmesser etwa der Hälfte des Durchmessers des Behälters (5) entspricht.

Fig. 1

- 1/2 -

0123984

Fig. 2

# EUROPÄISCHER RECHERCHENBERICHT

**0123984**
Nummer der Anmeldung

EP 84 10 4145

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-4 351 658 (R. OLSHANSKY)<br><br>* Figur 1; Spalte 2, Zeile 66 - Spalte 3, Zeile 46 * | 1,3 | C 03 C 25/02<br>D 06 B 3/04 |
| Y | GB-A-2 048 726 (THE POST OFFICE)<br>* Figur 4; Seite 4, Zeile 104 - Seite 4, Zeile 15 * | 1,3 | |
| Y | EP-A-0 005 796 (BAYER)<br><br>* Figur; Seite 4, Zeile 1 - Seite 5, Zeile 25 * | 1,3 | |

---

| | RECHERCHIERTE SACHGEBIETE (Int. Cl. ³) |
|---|---|
| | C 03 C 25/02<br>D 06 B 3/00 |

Der vorliegende Recherchenbericht wurde für alle Patentansprüche erstellt.

| Recherchenort<br>DEN HAAG | Abschlußdatum der Recherche<br>29-06-1984 | Prüfer<br>BOUTRUCHE J.P.E. |
|---|---|---|